(19) Europäisches Patentamt

European Patent Office

Office européen des brevets

(11) Veröffentlichungsnummer : **0 106 904**
**B1**

(12) **EUROPÄISCHE PATENTSCHRIFT**

(45) Veröffentlichungstag der Patentschrift :
26.06.85

(21) Anmeldenummer : 82109740.9

(22) Anmeldetag : 22.10.82

(51) Int. Cl.⁴ : **H 04 N 9/44**

(54) IC-Satz aus zwei integrierten Schaltungen mit einer PLL-Schleife für Farbfernsehempfänger.

(43) Veröffentlichungstag der Anmeldung :
02.05.84 Patentblatt 84/18

(45) Bekanntmachung des Hinweises auf die Patenterteilung : 26.06.85 Patentblatt 85/26

(84) Benannte Vertragsstaaten :
DE FR GB IT NL

(56) Entgegenhaltungen :
EINE NEUE DIMENSION-VLSI-DIGITAL-TV-SYSTEM,
September 1981, Intermetall, Freiburg, DE.

(73) Patentinhaber : Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL

(72) Erfinder : Sauer, Wolfgang, Dipl.-Ing.
Eisenlohrstrasse 12
D-7800 Freiburg (DE)
Erfinder : Schat, Hermanus
Habichtweg 26
D-7800 Freiburg (DE)
Erfinder : Freyberger, Laurin C., Dipl.-Ing.
Unter Stad 3
D-7836 Bahlingen (DE)
Erfinder : Schmidtpott, Friedrich
Am Büfing 6
D-7803 Gundelfingen (DE)

(74) Vertreter : Stutzer, Gerhard, Dr. et al
Deutsche ITT Industries GmbH Patent- und Lizenzabteilung Hans-Bunte-Strasse 19 Postfach 840
D-7800 Freiburg (DE)

EP 0 106 904 B1

## Beschreibung

Die Erfindung betrifft einen IC-Satz aus zwei integrierten Schaltungen für einen Farbfernsehempfänger mit digitaler Signalverarbeitung, die einen in Form einer phasenverriegelten Schleife (PLL-Schleife) realisierten Taktoszillator zur Erzeugung von Zweiphasen-Taktsignalen enthalten, wobei in der ersten integrierten Schaltung die Phasenvergleichsstufe der PLL-Schleife und in der zweiten integrierten Schaltung deren spannungsgesteuerter Oszillator angeordnet sind, dessen Spannungssteuerungssignale über höchstens zwei Verbindungsleitungen von der ersten zur zweiten integrierten Schaltung gelangen, vgl. den Oberbegriff des Anspruchs 1. Ein derartiger IC-Satz ist aus den von der Fa. Intermetall in dem Buch « DIGIT 2000 VLSI-Digital-TV-System », März 1982 enthaltenen Seiten 1-3 und 1-4, 4-1 bis 4-14 und 8-1 bis 8-5 beschrieben. Dabei betreffen die mit 4 beginnenden Seiten die integrierte Schaltung MAA 2200 und die mit 8 beginnenden die integrierte Schaltung MEA 2600. Auf Seite 8-2 ist angegeben, daß der in der integrierten Schaltung MEA 2600 integrierte spannungsgesteuerte Oszillator Teil einer PLL-Schleife ist, deren anderen Teil, die Phasenvergleichstufe, sich in der integrierten Schaltung MAA 2200 befindet, und daß die Phasenvergleichsstufe Steuersignale an ein externes, also außerhalb der beiden integrierten Schaltungen angeordnetes, Tiefpaßfilter liefert, das aus den Steuersignalen Abstimmspannungen für den spannungsgesteuerten Oszillator bildet.

Bei der Verbesserung des bekannten IC-Satzes hat sich gezeigt, daß die Lösung mit dem erwähnten externen Tiefpaßfilter vom Integrationsstandpunkt aus noch unzulänglich ist, weil der Anwender des IC-Satzes diesen mit äußeren diskreten Bauelementenzu beschalten hat. Zusätzlich stellen die unterschiedlichen Pegelverhältnisse wegen der räumlichen Trennung des IC-Satzes und des externen Tiefpaßfilters eine Störmöglichkeit dar, und zwar bezogen auf Gleich- und Wechselspannungs-Verhalten der Regelschleife (Störe kopplung durch Spannungsabfall und kapazitive bzw. induktive Verkopplung).

Der in den Ansprüchen gekennzeichneten Erfindung liegt daher die Aufgabe zugrunde, den bekannten IC-Satz so weiterzubilden, daß auf die für das Tiefpaßfilter erforderlichen äußeren Bauelemente verzichtet werden kann, deren Funktion ist also durch mitintegrierte Schaltungsteile zu ersetzen. Dabei ist darauf zu achten, daß nicht mehr als die beiden bereits vorhandenen Verbindungsleitungen zur Übertragung der Spannungssteuerungssignale an die zweite integrierte Schaltung benötigt werden. Die Lösung der Aufgabe besteht in der digitalen Übertragung der Phasenvergleichssignale und zusätzlich in der Einbeziehung des tiefpaßfilters als digitales Tiefpaßfilter in dem IC-Satz.

Die Erfindung wird nun anhand der Figuren der Zeichnungen näher erläutert.

Figur 1 zeigt schematisch und blockschaltbildartig die für die Erfindung wesentlichen Teilschaltungen des IC-Satzes,

Figur 2 zeigt Zeitdiagramme von drei bei der Anordnung nach Fig. 1 auftretenden Signalen,

Figur 3 zeigt ebenfalls schematisch eine Weiterbildung der Anordnung nach Fig. 1,

Figur 4 zeigt schematisch und blockschaltbildmäßig eine Abwandlung des IC-Satzes nach der Erfindung mit nur einer Verbindungsleitung für die Steuerungssignale, und

Figur 5 zeigt den zeitlichen Verlauf von verschiedenen bei der Anordnung nach Fig. 5 auftretenden Signalen.

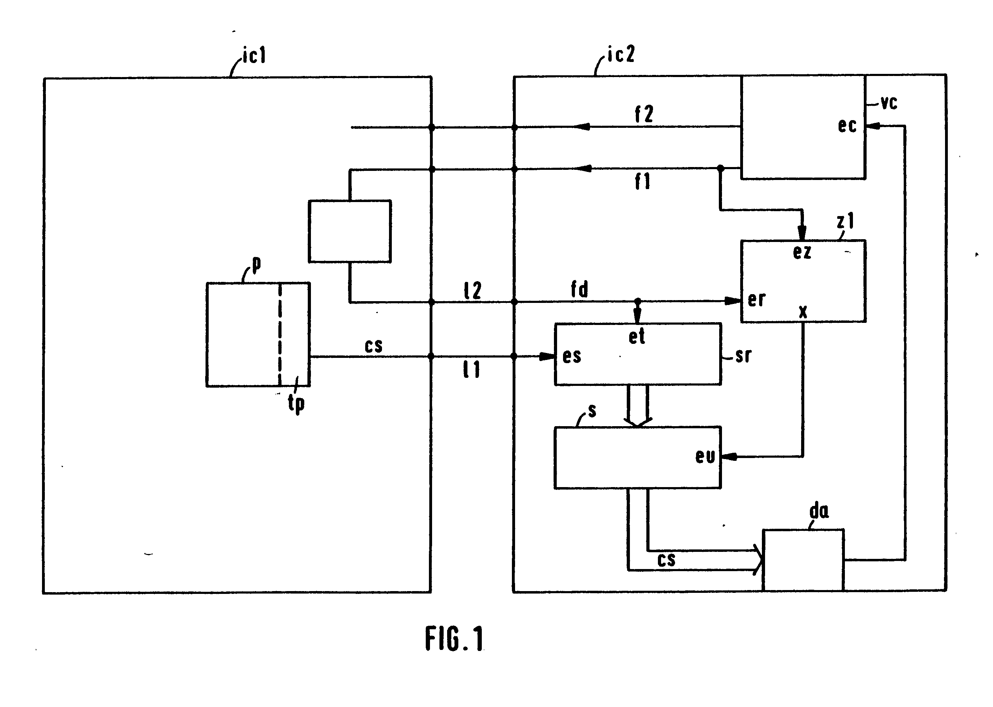

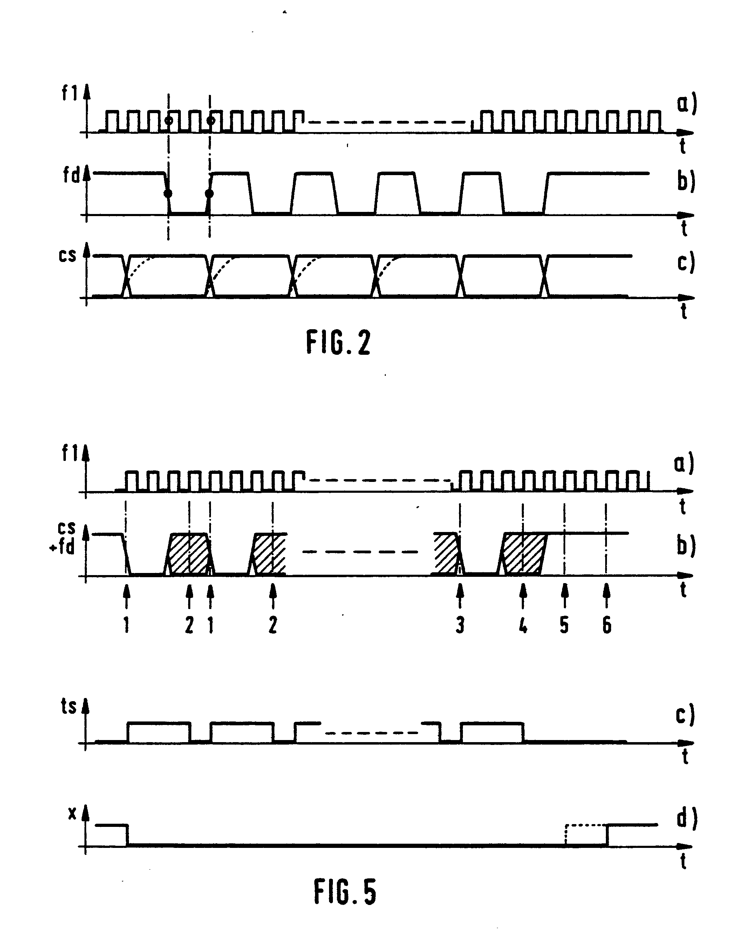

Die Fig. 1 zeigt schematisch und nach Art eines Blockschaltbilds die für die Erfindung wesentlichen Teilschaltungen des aus der ersten integrierten Schaltung ic1 und der zweiten integrierten Schaltung ic2 bestehenden IC-Satzes. Für die Erfindung ist wesentlich, daß diese Teile zusammen eine phasenverriegelte Schleife (PLL-Schleife) bilden, deren beide wesentliche Teilschaltungen auf die beiden integrierten Schaltungen aufgeteilt sind. So befindet sich in der ersten integrierten Schaltung ic1 unter anderem die Phasenvergleichsstufe p mit digitalem Tiefpaßfilter tp am Ausgang, während in der zweiten integrierten Schaltung ic2 der spannungsgesteuerte Oszillator vc angeordnet ist. Entsprechend der Erfindung werden die Steuerungssignale cs für die Spannungssteuerung des Oszillators vc über die erste Verbindungsleitung l1 von der ersten integrierten Schaltung ic1 zur zweiten integrierten Schaltung ic2 übertragen, wobei diese Steuerungssignale entsprechend einem Merkmal der Erfindung Digitalsignale sind, wie dies auch in Fig. 2c gezeigt ist.

Zur zeitlich koordinierten Übertragung dieser digitalen Steuerungssignale cs dienen die auf der zweiten Verbindungsleitung l2 übertragenen Datentaktsignale fd, deren zeitlicher Verlauf in Fig. 2b gezeigt ist. Diese können innerhalb der ersten integrierten Schaltung ic1 in einer geeigneten Stufe gebildet werden, deren Eingang eines der vom spannungsgesteuerten Oszillators vc und somit dem Taktoszillator erzeugten Taktsignale f1, f2 zugeführt ist. Für die Signalverläufe der Fig. 2 ist vorausgesetzt, daß das Datentaktsignal fd aus dem ersten Taktsignal f1 durch einen Frequenzteiler gebildet wird, dessen Teilungszahl 4 ist.

Die zweite integrierten Schaltung ic2 enthält den ersten Zähler z1, dessen Zähleingang ez das erste Taktsignal f1 des spannungsgesteuerten Oszillators vc zugeführt ist. Der erste Zähler z1 zählt somit diese Taktimpulse. An seinem Reset-Eingang er ist die zweite Verbindungsleitung l2 angeschlossen, so daß ihm die Datentaktsignale fd zugeführt sind.

Ferner enthält die zweite integrierte Schaltung ic2 das Schierberegister sr, an dessen Serieneingang es die erste Verbindungsleitung l1 angeschlossen ist, so daß dort die digitalen Steuerungssignale cs anstehen. Der Takteingang et des Schieberegisters sr liegt an der zweiten Verbindungsleitung l2 und ist somit mit den Datentaktsignalen fd gespeist. Der Parallelausgang des Schieberegisters sr liegt am Paralleleingang des Speichers s, dessen Parallelausgang mit dem Paralleleingang des Digital-Analog-Wandlers da verbunden ist. der Übernahmeeingang eu des Speichers s ist mit dem einzelnen Zählerstandausgang × des ersten Zählers z1 verbunden. Dieser Zählerstandausgang × ist so gewählt, daß für den ihm zugeordneten Zahlenwert X, die Frequenz F der Taktsignale f1, f2 und die Frequenz Fd der Datentaktsignale fd die Beziehung erfüllt ist : $X/F \geqslant 1/Fd$.

Wird für die Wirkungsweise der in Fig. 1 gezeigten Anordnung positive Logik vorausgesetzt, so soll der Reset-Eingang er des ersten Zählers z1 so ausgebildet sein, daß er beim negativeren Pegel L zweier Binärsignal-Pegel H, L zurückgesetzt wird. Der Übernahmeeingang eu des Speichers s ist dagegen wie üblich ein auf einen entsprechenden H-Pegel am Zählerstandausgang × ansprechender Eingang, d. h. bei Auftreten eines H-Pegels werden die am Parallelausgang des Schieberegisters sr vorhandenen Digitalsignale in den Speicher s übernommen. Diese Übernahme geschieht, wie Fig. 2 zeigt, erst am Ende eines auf der ersten Verbindungsleitung 11 übertragenen Datenworts, welches Ende durch Abschalten des Datentaktsignals fd und Klemmung der zweiten Verbindungsleitung l2 auf einem Dauer-H-Pegel signalisiert wird. Durch diesen Dauer-H-Pegel kann der erste Zähler z1 den Zählerstand X erreichen, und somit kann die Datenübernahme in den Speicher s ausgelöst werden. Während des Anstehens des Datentaktsignals fd kann dagegen der erste Zähler z1 nicht den Zählerstand × erreichen, da durch den im Datentaktsignal fd periodisch enthaltenen L-Pegel der erste Zähler z1 immer wieder zurückgesetzt wird. Durch die zeitliche Zuordnung der Datentaktsignale fd zur Dauer der Steuerungssignale cs sowie die in der zweiten integrierten Schaltung ic2 vorgesehenen Teilschaltungen z1, da, sr, s ist es somit möglich, mit den vom bekannten Stand der Technik her geläufigen zwei Verbindungsleitungen auch bei digitaler Steuerungssignalübertragung auszukommen.

Die Zuordnung zwischen digitalen Steuerungssignalen cs und Datentaktsignalen fd kann so gewählt werden, daß das Verschieben der Daten innerhalb des Schieberegisters sr erst erfolgt, wenn in den einzelnen Stufen ein gegenüber dem vorausgegangenen Schiebezyklus stationärer Zustand wieder erreicht ist, sich die Daten also sozusagen beruhigt haben. In Fig. 2 ist dies links durch die mit zwei kleinen Kreisen markierten Flanken des Datentaktsignals fd angedeutet. Bei der abfallenden Flanke werden die Daten am Eingang eingelesen und bei der ansteigenden Flanke dann verschoben.

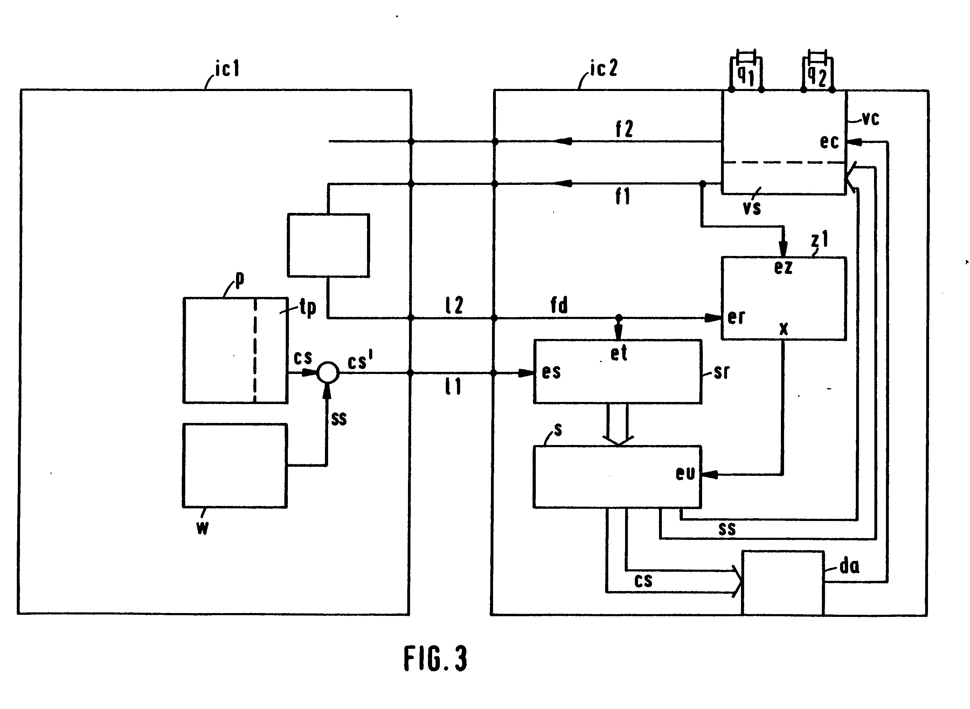

Die Fig. 3 zeigt ebenfalls schematisch und blockschaltbildartig eine Weiterbildung der Anordnung nach Fig. 1 für Mehrnormenfarbfernsehempfänger. Der Taktoszillator ist dabei als Quarzoszillator mit mehreren Quarzen q1, q2 ausgebildet, deren Nennfrequenz ein ganzzahliges Vielfaches vorzugsweise das Vierfache, der Referenzträgerfrequenz unterschiedlicher Fernsehnormen ist. Der Quarz q1 kann also beispielsweise für die PAL- und der Quarz q2 für die NTSC-Norm vorgesehen sein. Auch Anordnungen mit einem dritten Quarz für die SECAM-Norm sind möglich. Bei dieser Weiterbildung werden auf der ersten Verbindungsleitung l1 nicht nur die digitalen Steuerungssignale cs sondern auch entsprechende Schaltsignale ss übertragen, die in der ersten integrierten Schaltung ic1 mit der entsprechenden Wahlstufe w erzeugt werden.

Schieberegister sr und Speicher s sind bezüglich ihrer Stufenzahl so dimensioniert, daß sie ein aus den digitalen Steuerungssignalen cs und den Schaltsignalen ss bestehendes Datenwort cs aufnehmen können. Die für die Schaltsignale ss vorgesehenen Stufen des Speichers s sind über deren Ausgänge mit den Eingängen der Schaltstufe vs des Oszillators vc verbunden. Ebenso wie bei der Anordnung nach Fig. 1 liegt der Ausgang des Digital-Analog-Wandlers da am Steuerungseingang ec des Oszillators vc.

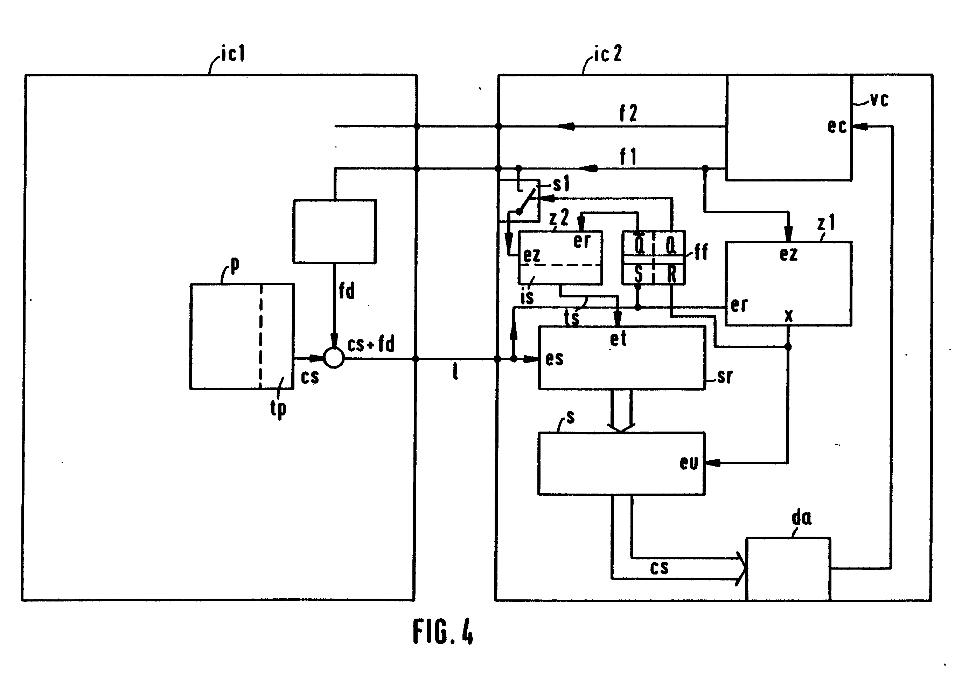

Die Fig. 4 zeigt wiederum schematisch wie bei den Fig. 1 und 3 eine derartige Abwandlung der Erfindung, daß zur Übertragung der digitalen Steuerungssignale cs lediglich die einzige Verbindungsleitung 1 erforderlich ist. In der integrierten Schaltung ic1 ist dazu zunächst vorgesehen, daß die Steuerungssignale cs mit den Datentaktsignalen fd entsprechend kombiniert werden. In der integrierten Schaltung ic2 sind zusätzlich zu den bei den Anordnungen nach den Fig. 1 und 3 vorhandenen Stufen der zweite Zähler z2, der elektronische Umschalter s1 und das RS-Speicherflipflop ff vorgesehen. Das erste Taktsignal f1 ist dem Zähleingang ez des zweiten Zählers z2 über die Schaltstrecke des elektronischen Umschalters s1 zugeführt. Die Zählkapazität des zweiten Zählers z2 ist gleich dem Verhältnis zwischen Taktfrequenz F und Datentaktfrequenz Fd.

Die Verbindungsleitung 1 liegt sowohl am Serieneingang es des Schieberegisters sr als auch am Reset-Eingang er des ersten Zählers z1, dessen einzelner Zählerstandausgang × außer mit dem Übernahmeeingang eu des Speichers s auch mit dem R-Eingang des RS-Speicherflipflops ff verbunden ist. Sein invertierender S-eingang liegt an der Verbindungsleitung 1. Der dazu gehörende Q-Ausgang liegt am Reset-Eingang des zweiten Zählers z2 und der Q-Ausgang am Steuereingang des elektronischen Umschalters s1.

Die Fig. 5 zeigt Signalverläufe, wie sie bei der Anordnung nach Fig. 4 auftreten. Die Fig. 5a zeigt den Verlauf des ersten Taktsignals f1 und die Fig. 5b das kombinierte Steuerungs-Datentaktsignal cs + fd. Die schraffierten Teile dieses Signals stellen die digitalen Daten dar. Die Fig. 5c zeigt das am Takteingang et des Schieberegisters sr liegende Signal ts. Dieses wird von der Impulsformerschaltung is in Fig. 4 derart erzeugt, daß dessen Rückflanke etwa in der Mitte von dessen zweiter Impulsdauerhälfte liegt. Hierzu liegt der höchste Zählerstandausgang des zweiten Zählers z2 zusammen mit vorausgehenden Zählerstandausgängen am Eingang der das Puls-Pausen-Verhältnis einstellenden Impulsformerschaltung is.

Fig. 5d zeigt schließlich das Signal am Zählerstandausgang × des ersten Zählers z1. Mit den Ziffern 1 ... 6 in Fig. 5b sind verschiedene für die Wirkungsweise wesentliche Zeitpunkte markiert. Mit 1 ist der Beginn des Schiebens im Schieberegister sr markiert. Bei 2 werden die Daten in das Schieberegisters r übernommen. Bei 3 beginnt der letzte Schiebeimpuls des gezeigten Datenworts, und 4 ist der letzte Übernahmezeitpunkt. 5 und 6 sind die Übernahmezeitpunkte des Datenworts in den Speicher s, wobei je nach dem letzten Datenzustand die Übernahme zu einem dieser beiden Zeitpunkte erfolgt.

Ein Vorteil der Erfindung ergibt sich unmittelbar aus der Lösung der gestellten Aufgabe, d. h. es kann auf äußere Bauelemente zur Erzeugung der Steuerspannung für den Oszillator vc verzichtet werden, so daß der Anwender des IC-Satzes nach der Erfindung weniger Bauelemente benötigt. Ferner werden die Pegelabhängigkeit und die Störempfindlichkeit erheblich reduziert.

Abschließend sei noch erwähnt, daß die Abwandlung nach Fig. 4 auch für die Weiterbildung nach Fig. 3 vorgesehen werden kann.

**Patentansprüche**

1. IC-Satz aus zwei integrierten Schaltungen (ic1, ic2) für einen Farbfernsehempfänger mit digitaler Signalverarbeitung, die einen in Form einer phasenverriegelten Schleife (PLL-Schleife) realisierten Taktosizillator zur Erzeugung von Zweiphasen-Taktsignalen (f1, f2) enthalten, wobei in der ersten integrierten Schaltung (ic1) die Phasenvergleichsstufe (p) und in der zweiten integrierten Schaltung (ic2) der spannungsgesteuerte Oszillator (vc) der PLL-Schleife angeordnet sind, dessen Steuerungssignale über höchstens zwei Verbindungsleitungen (l1, l2) von der ersten zur zweiten integrierten Schaltung (ic1, ic2) gelangen, gekennzeichnet durch folgende Merkmale :

die Phasenvergleichsstufe (p) enthält ausgangsseitig ein digitales Tiefpaßfilter (tp),

die Steuerungssignale (cs) gelangen als Digitalsignale über die erste Verbindungsleitung (l1) zur zweiten integrierten Schaltung (ic2), und diese enthält :

— einen das erste Taktsignal (f1) zählenden ersten Zähler (z1), dessen Reset-Eingang (er) an der während der Dauer der Steuerungssignale (cs) Datentaktsignale (fd) führenden zweiten Verbindungsleitung (l2) liegt,

— ein mit seinem Takteingang (et) an der zweiten Verbindungsleitung (l2) liegendes Schieberegister (sr), dessen Serieneingang (es) an der ersten Verbindungsleitung (l1) liegt,

— einen Speicher (s), dessen Paralleleingang mit dem Parallelausgang des Schieberegisters (sr) und dessen Übernahmeeingang (eu) mit einem solchen einzelnen Zählerstandausgang (x) des ersten Zählers (z1) verbunden ist, daß gilt : X/F = 1/Fd, wobei mit X der dem einzelnen Zählerstandausgang (x) entsprechende Zahlenwert, mit F die Frequenz der Taktsignale (f1, f2) und mit Fd die Frequenz der Datentaktsignale (fd) bezeichnet ist, und

— einen Digital-Analog-Wandler (da), dessen Paralleleingang mit dem Parallelausgang des Speichers (s) und dessen Ausgang am Steuerungseingang (ec) des Oszillators (vc) liegt.

2. IC-Satz nach Anspruch 1, gekennzeichnet durch folgende Merkmale :

der Oszillator (vc) ist als Quarzoszillator ausgebildet und wahlweise an einem von mindestens zwei Quarzen (q1, q2) betrieben, deren Nennfrequenz ein ganzzahliges Vielfaches, vorzugsweise das Vierfache, der Referenzträgerfrequenz unterschiedlicher Fernsehnormen ist,

die Steuerungssignale (cs') enthalten auch Schaltsignale (ss) zur Auswahl eines der Quarze (q1, q2), und

die den Schaltsignalen (ss) entsprechend zugeordneten Parallelausgänge des Speichers (s) liegen direkt an einer entsprechenden Schaltstufe (vs) des Oszillators (vc).

3. Abwandlung des IC-Satzes nach Anspruch 1 oder 2, mit nur einer Verbindungsleitung (1), gekennzeichnet durch folgende Merkmale :

das erste Taktsignal (f1) liegt über die Schaltstrecke eines elektronischen Schalters (s1) am Zähleingang (ez) eines zweiten Zählers (z2), dessen Zählkapazität gleich dem Verhältnis zwischen Taktfrequenz (F) und Datentaktfrequenz (Fd) ist,

die Verbindungsleitung (1) liegt am Serieneingang (es) des Schieberegisters (sr) und am Reset-Eingang (er) des ersten Zählers (z1), dessen einzelner Zählerstandausgang (x) außer mit dem Übernahmeeingang (eu) des Speichers (s) auch mit dem R-Eingang eines RS-Speicherflipflops (ff) verbunden ist, dessen invertierender S-Eingang an der Verbindungsleitung (1) angeschlossen ist,

der Q-Ausgang des RS-Flipflops (ff) liegt am Steuereingang des elektronischen Schalters (s1) und sein Q-Ausgang am Reset-Eingang (er) des zweiten Zählers (z2),

der höchste Zählerstandausgang des zweiten Zählers (z2) liegt zusammen mit vorausgehenden Zählerstandausgängen am Eingang einer das Puls-Pausen-Verhältnis von dessen Ausgangssignal derart einstellenden Impulsformerschaltung (is), daß dessen Rückflanke etwa in der Mitte von dessen zweiter Impulsdauerhälfte liegt, und

der Ausgang der Impulsformerschaltung (is) liegt am Takteingang (et) des Schieberegisters (sr).

## Claims

1. An IC kit consisting of two integrated circuits (ic1, ic2) for a color-television receiver with digital signal processing, which each contain a clock oscillator realized in the form of a phase-locked loop (PLL) for producing two-phase clock signals (f1, f2), with said first integrated circuit (ic1) containing the phase-comparison stage (p) and with said second integrated circuit (ic2) containing the voltage-controlled oscillator (vc) of the phase-locked loop, with the control signals thereof being applied via a maximum of two connecting lines (l1, l2) from said first (ic1) to said second (ic2) integrated circuit, characterized by the following features :

the phase-comparison stage (p) contains on its output side a digital low-pass filter (tp),

the control signals (cs) are applied as digital signals via a first connecting line (l1) to the second integrated circuit (ic2), and

this second integrated circuit contains :

— a first counter (z1) counting the first clock signal (f1), with the reset input (er) thereof being connected to the second connecting line (l2), conducting data clock signals (fd) during the period of the control signals (cs),

— a shift register (sr) which is connected with its clock input (et) to the second connecting line (l2), with the serial input (es) thereof being connected to the first connecting line (l1),

— a storage device (s) whose parallel input is connected to the parallel output of the shift register (sr) and whose enable input (eu) is connected to such a single counter-reading output (x) of the first counter (z1), that the following applies : X/F ⩾ 1/Fd, with X being the numerical value corresponding to the individual counter-reading output (x), with F indicating the frequency of the clock signals (f1, f2), and Fd indicating the frequency of the data clock signals (fd), and

— a digital-to-analog converter (da) whose parallel input is connected to the parallel output of the storage device (s), and whose output is connected to the control input (ec) of the oscillator (vc).

2. An IC kit as claimed in claim 1, characterized by the following features :

the oscillator (vc) is designed as a crystal oscillator and is operated optionally at one of at least two crystals (q1, q2), whith the rated frequency thereof being an integer multiple, preferably four times the reference carrier frequency of different television standards,

the control signals (cs') also contain switching signals (ss) for selecting one of the crystals (q1, q2), and

the parallel outputs of the storage device (s) which are accordingly associated with the switching signals (ss), are connected directly to a corresponding switching stage (vs) of the oscillator (vc).

3. A modification of the IC kit as claimed in claims 1 or 2, employing one connecting line (l) only, characterized by the following features :

the first clock signal (f1) is applied via the switching section of an electronic switch (s1), to the counting input (ez) of a second counter (z2) whose counting capacity is equal to the ratio of the clock frequency (F) to the data clock frequency (Fd),

the connecting line (l) is connected to the serial input (es) of the shift register (sr) and to the reset input (er) of the first counter (z1) whose said single counter-reading output (x), besides to the enable input (eu) of the storage device (s), is also connected to the R input of an RS storage flip-flop (ff) whose inverting S input is connected to the connecting line (l),

the Q output of the RS flip-flop (ff) is connected to the control input of the electronic switch (s1), and the Q output thereof is connected to the reset input (er) of the second counter (z2),

the highest counter-reading output of the second counter (z2) together with the preceding counter-reading outputs, is connected to the input of a pulse-forming circuit (is) adjusting in such a way the pulse/no pulse ratio of the output signal thereof, that its trailing edge will come to lie in about the center of the second half of its pulse duration, and

the output of the pulse-shaping circuit (is) is connected to the clock input (et) of the shift-register (sr).

## Revendications

1. Jeu de circuits intégrés composé de deux circuits intégrés (ic1, ic2) pour téléviseur couleur à traitement numérique des signaux, comprenant un oscillateur de synchronisation réalisé sous la forme d'une boucle à verrouillage de phase (boucle PLL) pour engendrer des signaux de synchronisation diphasés (f1, f2), le premier circuit intégré (ic1) renfermant l'étage comparateur de phase (p) et le second circuit intégré (ic2) l'oscillateur commandé en tension (vc) de la boucle PLL, les signaux de commande en tension dudit oscillateur étant transmis par au plus deux lignes de connexion (l1, l2) du premier au second circuit intégré (ic1, ic2), caractérisé en ce que

l'étage comparateur de phase (p) renferme côté sortie un filtre passe-bas (tp), en ce que

les signaux de commande (cs) sont envoyés sous forme de signaux numériques vers le second circuit intégré (ic2) par la première ligne de connexion (l1), et en ce que

ledit second circuit intégré (ic2) renferme

un premier compteur (z1) comptant le premier signal de synchronisation (f1), dont l'entrée de remise à l'état initial (er) est reliée à la seconde ligne de connexion (l2) qui achemine des signaux de synchronisation de données (fd) pendant la durée des signaux de commande (cs),

— un registre à décalage (sr) dont l'entrée de synchronisation (et) est reliée à la seconde ligne de connexion (l2) et dont l'entrée série (es) est reliée à la première ligne de connexion (l1),

— une mémoire (s) dont l'entrée en parallèle est reliée à la sortie en parallèle du registre à décalage (sr) et dont l'entrée de validation (eu) est reliée à une sortie de position de comptage individuelle (x) du premier compteur (z1) de manière que $X/F \geqslant 1/Fd$, la valeur numérique correspondant à la sortie de position de comptage individuelle (x) étant désignée par X, la fréquence des signaux de synchronisation (f1, f2) par F et la fréquence des signaux de synchronisation de données (fd) par Fd, et

— un convertisseur numérique-analogique (da) dont l'entrée en parallèle est reliée à la sortie en parallèle de la mémoire (s) et dont la sortie est reliée à l'entrée de commande (ec) de l'oscillateur (vc).

2. Jeu de circuits intégrés conforme à la revendication 1, caractérisé en ce que

l'oscillateur (vc) est conçu sous la forme d'un oscillateur piloté par quartz et exploité au choix avec l'un de deux quartz au moins (q1, q2) dont la fréquence nominale est multiple entier, de préférence quatre fois la fréquence porteuse de référence de diverses normes de télévision, en ce que

les signaux de commande (cs') renferment également des signaux de commutation (ss) permettant de sélectionner l'un des quartz (q1, q2), et en ce que

les sorties en parallèle de la mémoire (s) affectées aux signaux de commutation (ss) sont reliées directement à un étage de commutation correspondant (vs) de l'oscillateur (vc).

3. Variante du jeu de circuits intégrés conforme à la revendication 1 ou 2, comportant une seule ligne de connexion (1), caractérisée en ce que

le premier signal de synchronisation (f1) est relié par le trajet de commutation d'un commutateur électronique (s1) à l'entrée de comptage (ez) d'un second compteur (z2) dont la capacité de comptage est égale au rapport entre la fréquence de synchronisation (F) et la fréquence de synchronisation de données (Fd), en ce que

la ligne de connexion (1) est reliée à l'entrée série (es) du registre à décalage (sr) et à l'entrée de remise à l'état initial (er) du premier compteur (z1) dont la sortie individuelle de position de comptage (x) est reliée, en plus de l'entrée de validation (eu) de la mémoire (s), à l'entrée R d'une bascule de mémoire RS (ff) dont l'entrée S de basculement est raccordée à la ligne de connexion (1), en ce que

la sortie Q de la bascule RS (ff) est reliée à l'entrée de commande du commutateur électronique (si) et sa sortie Q à l'entrée de remise à l'état initial (er) du second compteur (z2), en ce que

la sortie de la plus haute position de comptage du second compteur (z2) est reliée, avec les sorties des positions de comptage précédentes, à l'entrée d'un circuit de mise en forme d'impulsions (is) dans lequel le rapport impulsions-intervalles de son signal de sortie est réglé de manière que le flanc arrière de chaque impulsion se trouve sensiblement au milieu de la seconde moité de sa période, et en ce que

la sortie du circuit de mise en forme d'impulsions (is) est reliée à l'entrée de synchronisation (et) du registre à décalage (sr).

FIG.1

**FIG. 2**

**FIG. 5**

FIG.3

FIG. 4